# EUROPÄISCHE PATENTSCHRIFT

(11) **EP 1 457 163 B1**
(45) Veröffentlichungstag und Bekanntmachung des Hinweises auf die Patenterteilung: **25.01.2006**
(21) Anmeldenummer: 04005533.7
(22) Anmeldetag: 09.03.2004
(51) Int. Cl.: A61C 3/025, A61C 1/00

(54) **Pulverstrahlgerät**
Air abrasive particle apparatus
Appareil jet de poudre

(30) Priorität: 14.03.2003 AT 4032003
(43) Veröffentlichungstag der Anmeldung: 15.09.2004
(73) Patentinhaber: W & H Dentalwerk Bürmoos GmbH, 5111 Bürmoos (AT)
(72) Erfinder: Meingassner, Wolfgang, 5122 Überackern (AT); Hochradl, Wolfgang, 5111 Bürmoos (AT)

(56) Entgegenhaltungen:
- WO-A-02/13721
- FR-A- 2 567 747
- US-A- 5 094 615
- US-A- 5 120 219

## Beschreibung

Die Erfindung bezieht sich auf ein dentales Pulverstrahlgerät mit Flüssigkeitszufuhr zur Oberflächenbehandlung von Zähnen mittels eines fluidisierten abrasiven Pulvers, insbesondere zum Entfernen von Zahnbelag, Zahnstein sowie Verfärbungen und zum Abfräsen, Aushöhlen und Schleifen von Zähnen oder Zahnstrukturen.

Pulverstrahlgeräte bestehen aus einem oder mehreren Behältern für abrasives Pulver (Salze, Metalle), einer Mischkammer in der das Pulver mit Druckluft fluidisiert wird, Anschlüssen für Druckluft und einem Handstück mit Düse zur gezielten Applikation des fluidisierten Pulvers, wie zum Beispiel in der WO 99/20199 A1 beschrieben. Manche Pulverstrahlgeräte sind zusätzlich mit einem Anschluß für eine Flüssigkeit ausgestattet, die ebenfalls über die Düse appliziert wird und den Arbeitsbereich von Partikeln freispülen sowie die Emission der sehr feinen Pulverpartikel aus dem Mundraum des Patienten und darüber hinaus verringern soll, siehe zum Beispiel die DE 101 13 289 A1.

Nachteilig bei allen bekannten Pulverstrahlgeräten ist die Gefahr von Ablagerungen und Verstopfungen in jenen Bauteilen, in denen das fluidisierte Pulver befördert wird, insbesondere in den Leitungen, im Handstück und dessen Düse. Ursachen der Ablagerungen sind einerseits die geringen Durchmesser der Bauteile sowie deren konstruktive Ausführung mit engen Biegungen. Hier bestehen aufgrund der anatomischen Gegebenheiten, des geringen Platzangebotes in der Mundhöhle bzw. der ergonomischen Anforderungen nur geringe Optimierungsmöglichkeiten. Zusätzlich begünstigen die hygroskopischen Eigenschaften der verwendeten Pulver die Gefahr von Ablagerungen.

Um die Verstopfungsgefahr zu verringern wird in der WO 99/20199 A1 vorgeschlagen in die Mischkammer eine zusätzliche Leitung zu führen, durch die, sobald das Pulverstrahlgerät eingeschaltet wird, konstant Reinluft gefördert wird. Dadurch werden Ablagerungen in der Leitung durch die das fluidisierte Pulver zum Handstück gefördert wird sowie in den Leitungen des Handstücks selbst und in der Düse verhindert.

Besonders groß ist die Gefahr von Verstopfungen bei Pulverstrahlgeräten mit Flüssigkeitszufuhr. Die Flüssigkeit wird während der Behandlung in Form eines Vorhanges oder als Luft-Flüssigkeits-. Gemisch (Spray) abgeben. Die Flüssigkeit und das fluidisierte Pulver werden zwar über vollkommen voneinander getrennte Leitungssysteme transportiert, jedoch werden beide Medien über die Düse am Vorderende des Handstückes versprüht, so daß hier die Mündungen der beiden Medienleitungen direkt nebeneinander situiert sind. Zum Teil werden die beiden Medien auch noch innerhalb der Düse in einer gemeinsamen Leitung oder Kammer zusammengeführt. Insbesondere während längerer Behandlungspausen besteht daher die Gefahr, daß in der Düse, dem Handstück aber auch den Leitungen verbliebenes Pulver Flüssigkeit von der Düsenspitze, dem Düseninneren und aus der Sprayleitung ansaugt und hartnäckige Inkrustierungen, die schließlich zu einer vollständigen Verstopfung und Unbrauchbarkeit des Handstückes, der Düse oder der Leitungen führen, entstehen.

Derartige Pulverstrahlgeräte sind aus der WO 02/13721 A1 und der US 5,120,219 bekannt. Bei beiden Pulverstrahlgeräten ist die Leitung für die Behandlungsflüssigkeit über einen zwischengeschalteten Flüssigkeitsbehälter mit der Druckluftquelle verbunden. Die Druckluft strömt während der Behandlung in die Flüssigkeitsbehälter, wodurch die Flüssigkeit aus dem Behälter in das Handstück mit Düse gefördert wird.

In der FR 2.567.747 A1 ist ein Pulverstrahlgerät mit einer ersten Leitung für das fluidisierte Pulver und einer zweiten Leitung für eine Behandlungsflüssigkeit offenbart. Die beiden Leitungen sind über ein Ventil miteinander verbunden, über das am Ende der Behandlung ein Unterdruck erzeugt wird, wodurch Behandlungsflüssigkeit in die Leitung für die Behandlungsflüssigkeit und das Pulverstrahlgerät gesaugt wird, um das sogenannte "Nachtropfen" zu verhindern.

Es besteht daher der dringende Bedarf Pulverstrahlgeräte mit Flüssigkeitszufuhr derart weiterzuentwickeln, daß die Möglichkeit der Vermischung von Pulver und Flüssigkeit minimiert und die Entstehung von Inkrustierungen, Ablagerungen und Verstopfungen verhindert wird. Des weiteren sollen auch Ablagerungen, die durch in der Sprayflüssigkeit enthaltene Partikel und gelöste Stoffe entstehen, verhindert werden. Dies betrifft insbesondere auch Kalkablagerungen wenn als Flüssigkeit Leitungswasser verwendet wird und dieses über einen Wärmetauscher, zum Beispiel einen Heizblock als Bestandteil eines Pulverstrahlgerätes, erwärmt wird.

Diese Aufgabe wird gemäß der vorliegenden Erfindung durch ein Pulverstrahlgerät mit Flüssigkeitszufuhr mit den Merkmalen des Anspruchs 1 und einem Verfahren gemäß Anspruch 11 gelöst. Besonders vorteilhafte Ausführungsformen sind in den entsprechenden Unteransprüchen angeführt.
Die in dem erfindungsgemäßen Pulverstrahlgerät verbliebene Flüssigkeit wird nach Anspruch 1 und Anspruch 11 mittels partikelfreier Druckluft (Serviceluft) aus den Flüssigkeit führenden Leitungen, in einem bevorzugten Ausführungsbeispiel auch aus dem Handstück und der Düse ausgeblasen.
In einem Ausführungsbeispiel erfolgt die Beaufschlagung der Flüssigkeitsleitung, des Handstückes und der Düse mit Serviceluft so lange, bis die darin enthaltene Flüssigkeitssäule entfernt wurde, in einem besonders bevorzugten Ausführungsbeispiel wird die Beaufschlagung mit Serviceluft bis zur Trockne aufrecht erhalten.
Um eine möglichst kostengünstige Ausführungsform zu erreichen stammen die Serviceluft zum Austreiben der Flüssigkeit und die Luft zur Fluidisierung des Pulvers aus der selben Druckluftquelle und werden über entsprechende Ventile, die bevorzugt über die Steuerschaltung des Pulverstrahlgeräts betätigt werden, auf die unterschiedlichen Medienleitungen aufgeteilt.
Das Austreiben der Flüssigkeit kann vom Anwender mittels eines Auslösers, beispielsweise eines Tasters, der entweder mit dem Ventil oder mit der Steuerschaltung des Pulverstrahlgeräts in Wirkverbindung steht, ausgelöst werden. In einem weiteren Ausführungsbeispiel wird der Ausblasvorgang automatisiert, bevorzugt erkennt die Steuerung die Beendigung der Flüssigkeitsförderung und / oder der Förderung von fluidisiertem Pulver und startet anschließend die Förderung der Serviceluft und betätigt (öffnet / schließt) die entsprechenden Ventile. In einem besonders bevorzugten Ausführungsbeispiel erfolgt das automatisierte Austreiben der Flüssigkeit zeitlich etwas verzögert, im Bereich von etwa 10 bis 60 Sekunden, um zu gewährleisten, daß während kurzer Behandlungsunterbrechungen, die der Anwender beispielsweise dazu nutzt, den Fortschritt seiner Tätigkeit zu beurteilen, die Ausblasfunktion nicht aktiviert wird.

Um das während eines Ausblasvorgangs austretende Pulver-Flüssigkeits-Gemisch aufzufangen und entsorgen zu können, wird in einem weiteren Ausführungsbeispiel vor dem Start der Reinigungsfunktion das Handstück in einen Köcher gesteckt und anschließend der Ausblasvorgang gestartet. Der Köcher kann als eigenständiges Bauteil oder als Teil der Steuervorrichtung oder einer Dentaleinheit ausgeführt sein, so daß die Entsorgung des ausgeblasenen Pulver-Flüssigkeits-Gemisches über die Dentaleinheit erfolgt. In einem bevorzugten Ausführungsbeispiel erkennt der Köcher, der mit der Steuerschaltung verbunden ist, eigenständig das Handstück und startet den Ausblasvorgang, sobald der Anwender das Handstück in den Köcher gesteckt hat.
In einem besonders bevorzugten Ausführungsbeispiel wird nicht nur die Flüssigkeit aus den Flüssigkeit führenden Leitungen und den daran anschließenden Leitungen im Handstück und der Düse ausgetrieben, sondern auch die im Leitungssystem für das fluidisierte Pulver und den daran anschließenden Leitungen im Handstück und der Düse verbliebenen Pulverreste. Damit wird das Handstück mit der Düse und zumindest auch Teile der beiden Leitungssysteme für die Flüssigkeit und das fluidisierte Pulver vollkommen von beiden Medien gereinigt, wodurch die Gefahr von Verstopfungen noch weiter verringert wird.

Das erfindungsgemäße Pulverstrahlgerät ermöglicht das Austreiben der Flüssigkeit aus der Düse, dem Handstück und den Flüssigkeit führenden Leitungen, wodurch ein Kontakt zwischen Behandlungspulver und Flüssigkeit während Behandlungspausen und das Entstehen von Inkrustierungen, Ablagerungen und Verstopfungen verhindert wird.

Die Erfindung wird nachfolgend anhand eines bevorzugten Ausführungsbeispiels und Bezug nehmend auf die beigefügte Zeichnung erläutert:

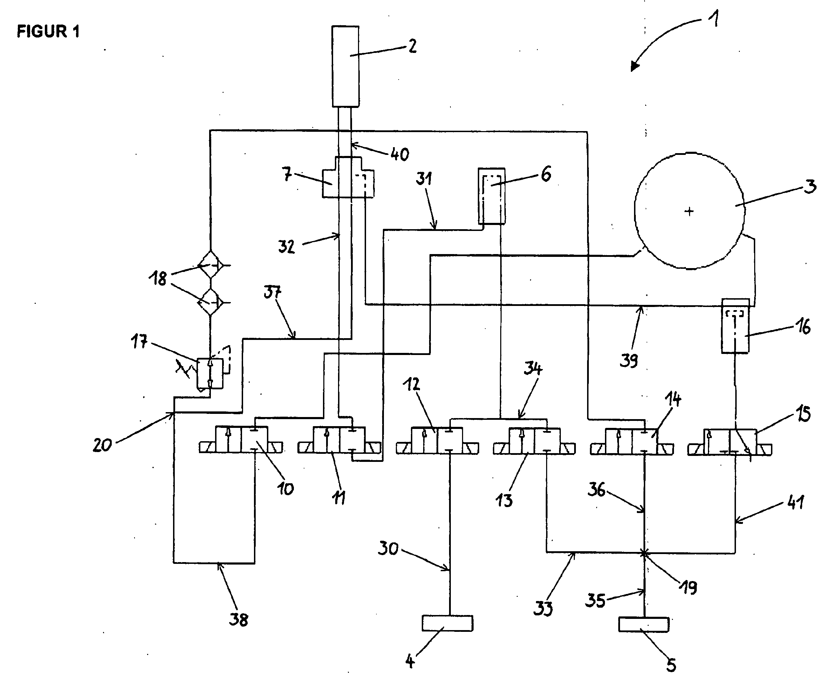

Figur 1 zeigt eine schematische Darstellung eines bevorzugten Ausführungsbeispiels eines erfindungsgemäßen Pulverstrahlgeräts

Das mit 1 bezeichnete, erfindungsgemäße Pulverstrahlgerät besteht aus einem Handstück mit Düse 2, einem Pulverbehälter 3 zur Lagerung und Fluidisierung des Behandlungspulvers sowie Anschlüssen an eine Flüssigkeitsquelle 4, bevorzugt an Leitungswasser, und eine Druckluftquelle 5.
Wird das Pulverstrahlgerät 1 in Betrieb genommen, so beginnt damit auch die Förderung der Druckluft über die Leitung 35 zur Verzweigung 19, die Leitung 36 und über das geöffnete Ventil 14, über zwei Filter 18 zur Entfernung von unerwünschten Partikeln und einen Druckluftregler 17 zum Ausgleich von Druckschwankungen zu einer weiteren Verzweigung 20, an der der Luftstrom in zwei Teilströme in den Leitungen 37 und 38 aufgeteilt wird: Die in Leitung 38 enthaltene Luft wird über ein Ventil 10 dem Pulverbehälter 3 zugeführt, wo die Fluidisierung des Pulvers erfolgt. Da dieser Vorgang Stand der Technik und einem Fachmann für Medizintechnik bekannt ist, wird darauf nicht im Detail eingegangen. Über die Leitung 39 erfolgt die Weiterleitung der partikelbeladenen Luft in den Versorgungsblock 7, wo es zur Vereinigung der Leitung 39 mit der an der Verzweigung 20 abgetrennten Leitung 37 mit partikelfreier Luft (Serviceluft) kommt. Der Serviceluftstrom dient der Verhinderung von Ablagerungen und Verstopfungen im Leitungsabschnitt 40 und den daran anschließenden Leitungsabschnitt für das fluidisierte Pulver im Handstück und der Düse 2. Die Förderung der Serviceluft erfolgt ohne Unterbrechung solange das Pulverstrahlgerät eingeschaltet ist. Im Gegensatz dazu kann der Luftstrom durch die Leitung 39 zum Pulverbehälter 3 unterbrochen werden sobald Druckluft über die Leitung 41 und das Ventil 15 zum Ventil 16, bevorzugt ein Quetschventil, geleitet wird.
Mit der Förderung des fluidisierten Pulvers wird auch das Ventil 12 zur Versorgung des Handstückes 2 mit Flüssigkeit, bevorzugt Wasser, zur Erzeugung eines Flüssigkeitssprays oder Flüssigkeitsmantels um die Behandlungsstelle geöffnet. Über die Leitung 30 gelangt die Flüssigkeit in einen Wärmetauscher 6, bevorzugt in Form eines Heizblocks, und anschließend über vom fluidisierten Pulver getrennte Leitungen 31 und 32 und durch ein Sicherheitsventil 11, das Rückfluß der Flüssigkeit vor allem bei Betriebsunterbrechungen verhindert, zum Handstück 2. Um insbesondere bei längeren Behandlungspausen einen Kontakt zwischen im Handstück verbliebenem Behandlungspulver und Sprayflüssigkeit zu vermeiden ist die Flüssigkeitsleitung 30 mit der Druckluftquelle 5 über die Leitungen 33 und 34 verbunden. Wird das Ventil 13 geöffnet, so strömt Druckluft durch die Flüssigkeit führenden Leitungen 30, 31 und 32 und das Handstück mit Düse 2 und treibt die darin enthaltene Flüssigkeit aus.
Die Steuerung des Betriebs des Pulverstrahlgeräts 1 und der darin enthaltenen Bauteile, wie zum Beispiel der Ventile 10-15, die Einstellung von Betriebsparametem oder die Auswahl von unterschiedlichen Betriebsarten erfolgt bevorzugt über eine bekannte, dem Stand der Technik entsprechende Steuervorrichtung, deren Aufbau und Funktion nicht näher erläutert wird.

Die Erfindung ist nicht auf das dargestellte Ausführungsbeispiel beschränkt.

## Patentansprüche

1. Pulverstrahlgerät (1) zur Oberflächenbehandlung von Zähnen mittels eines fluidisierten abrasiven Pulvers, mit einem Handstück mit Düse (2), Medienleitungen (32, 40) zum Handstück (2) für das fluidisierte Pulver und die Behandlungsflüssigkeit sowie Anschlüssen an Quellen für Druckluft (5), Behandlungsflüssigkeit (4) sowie ein abrasives Pulver (3),
**dadurch gekennzeichnet, daß**
die Medienleitung für die Flüssigkeit (30, 31, 32) mit einer Druckluftquelle (5) verbunden ist, um während einer Behandlungspause Druckluft in die Flüssigkeitsleitung (30, 31, 32) und bevorzugt auch in das Handstück mit Düse (2) einzuleiten und die darin verbliebene Behandlungsflüssigkeit auszutreiben, wobei die Druckluft stromabwärts der Behandlungsflüssigkeitsquelle (4) in die Flüssigkeitsleitung (30, 31, 32) eintritt.

2. Pulverstrahlgerät (1) nach Anspruch 1,
**dadurch gekennzeichnet, daß**
die Medienleitung für die Flüssigkeit (30, 31, 32) über eine Leitung (33, 34) mit einer Druckluftquelle (5) verbunden ist.

3. Pulverstrahlgerät (1) nach Anspruch 2,
**dadurch gekennzeichnet, daß**
die Leitung (33, 34) ein Ventil (13) enthält und daß bei geöffnetem Ventil (13) Druckluft in die Flüssigkeitsleitung (30, 31, 32) strömt.

4. Pulverstrahlgerät (1) nach Anspruch 3,
**gekennzeichnet durch**
einen Auslöser zum Betätigen des Ventils (13), der mit dem Ventil (13) oder der Steuerschaltung des Pulverstrahlgeräts in Wirkverbindung steht.

5. Pulverstrahlgerät (1) nach Anspruch 3,
**dadurch gekennzeichnet, daß**
eine Steuerschaltung das Ventil (13) mit Beendigung der Flüssigkeitsförderung und / oder der Förderung von fluidisiertem Pulver automatisch betätigt.

6. Pulverstrahlgerät (1) nach Anspruch 5,
**dadurch gekennzeichnet, daß**
zwischen der Beendigung der Flüssigkeitsförderung und / oder der Förderung von fluidisiertem Pulver und dem Betätigen des Ventils (13) eine zeitliche Verzögerung, bevorzugt im Bereich von 10 bis 60 Sekunden, liegt.

7. Pulverstrahlgerät (1) nach einem der vorhergehenden Ansprüche,
**dadurch gekennzeichnet, daß**
die Serviceluft zum Austreiben der Flüssigkeit und die Luft zur Fluidisierung des Pulvers aus der selben Druckluftquelle (5) stammen.

8. Pulverstrahlgerät (1) nach einem der vorhergehenden Ansprüche,
**dadurch gekennzeichnet, daß**
zur Aufnahme des während des Ausblasvorgangs austretenden Pulver-Flüssigkeits-Gemisches ein Köcher vorgesehen ist.

9. Pulverstrahlgerät (1) nach Anspruch 8,
**gekennzeichnet durch**
eine Handstückerkennung des mit der Steuerschaltung verbunden Köchers, wobei die Steuerschaltung den Ausblasvorgang startet, sobald das Handstück (2) im Köcher aufgenommen ist.

10. Pulverstrahlgerät (1) nach einem der vorhergehenden Ansprüche,
**dadurch gekennzeichnet, daß**
eine Leitung (37) für partikelfreie Luft sich mit einer Leitung (39) für das fluidisierte Pulver vereinigt.

11. Verfahren zur Verhinderung der Bildung von Inkrustierungen, Ablagerungen und Verstopfungen in Pulverstrahlgeräten nach Anspruch 1 mit Flussigkeitszufuhr (1),
**gekennzeichnet durch**
das Austreiben von in der Flüssigkeitsleitung (30, 31, 32) enthaltener Flüssigkeit mittels Druckluft während einer Behandlungspause, wobei die Druckluft stromabwärts der Behandlungsflüssigkeitsquelle (4) in die Flüssigkeitsleitung (30, 31, 32) eingeleitet wird.

12. Verfahren nach Anspruch 11,
**dadurch gekennzeichnet, daß**
die Flüssigkeit auch aus dem Handstück und der Düse (2) des Pulverstrahlgerätes (1) ausgetrieben wird.

## Claims

1. Air abrasive particle apparatus (1) for the surface treatment of teeth using a fluidized abrasive powder, comprising a handpiece with nozzle (2), medium lines (32, 40) to the handpiece (2) for the fluidized powder and the treatment fluid, as well as connections to pressurized air (5), treatment fluid (4) and abrasive powder (3) supplies, **characterized in that**
the medium line for the fluid (30, 31, 32) is connected to a pressurized air supply (5) in order to introduce pressurized air into the fluid line (30, 31, 32) and preferably also into the handpiece with nozzle (2) and drive out the residual treatment fluid from these components during an interruption in treatment, with the pressurized air flowing downstream from the treatment fluid supply (4) to the fluid line (30, 31, 32).

2. Air abrasive particle apparatus (1) according to claim 1, **characterized in that**
the medium line for the fluid (30, 31, 32) is connected via a line (33, 34) to a pressurized air supply (5).

3. Air abrasive particle apparatus (1) according to claim 2, **characterized by**
a valve (13) in the line (33, 34), enabling pressurized air to flow into the fluid line (30, 31, 32) when the valve is open.

4. Air abrasive particle apparatus (1) according to claim 3, **characterized by**
a trigger for activating the valve (13), functionally connected to valve (13) or to the control circuit of the air abrasive particle apparatus (1).

5. Air abrasive particle apparatus (1) according to claim 3, **characterized by**
a control circuit which automatically actuates valve (13) when fluid transport and / or fluidized powder transport ceases.

6. Air abrasive particle apparatus (1) according to claim 5, **characterized by**
a time delay between the end of fluid transport and / or fluidized powder transport and actuation of the valve (13), preferably in the range of 10 to 60 seconds.

7. Air abrasive particle apparatus (1) according to one of the preceding claims, **characterized in that**
a single pressurized air supply (5) supplies service air for driving out the fluid and air for fluidizing the powder.

8. Air abrasive particle apparatus (1) according to one of the preceding claims, **characterized by**
the provision of a holder to take up the powder-fluid mixture emitted during the purging process.

9. Air abrasive particle apparatus (1) according to claim 8, **characterized by**
a handpiece recognition of the holder connected to the control unit, enabling the control unit to initiate the purging process as soon as the handpiece (2) is placed in the holder.

10. Air abrasive particle apparatus (1) according to one of the preceding claims, **characterized by**
a line (37) for particle-free air which joins a line (39) for the fluidized powder.

11. Method for preventing the formation of incrustation, sedimentation and clogging in the air abrasive particle apparatus with fluid feed (1) according to claim 1, **characterized by**
driving off the fluid remaining in the fluid line (30, 31, 32) by means of pressurized air during an interruption in treatment, with the pressurized air flowing downstream from the treatment fluid supply (4) to the fluid line (30, 31, 32).

12. Method according to claim 11, **characterized by**
driving fluid out of the handpiece and nozzle (2) of the air abrasive particle apparatus (1) as well.

## Revendications

1. Un appareil jet de poudre (1) pour traiter la surface des dents grâce à une poudre abrasive fluidisée, avec une pièce à main avec un gicleur (2), des conduites de substances (32, 40) vers la pièce à main (2) pour la poudre fluidisée et le liquide de traitement, ainsi que des raccords avec des sources pour l'air comprimé (5), le liquide de traitement (4), ainsi qu'une poudre abrasive (3), **caractérisé par le fait que**
la conduite de substances pour le liquide (30, 31, 32) est reliée à une source d'air comprimé (5) afin d'introduire - pendant une pause de traitement - de l'air comprimé dans la conduite à liquide (30, 31, 32) et de préférence également dans la pièce à main avec le gicleur (2) et de chasser le liquide de traitement encore restant à l'intérieur, alors que l'air comprimé entre dans la conduite à liquide (30, 31, 32) en aval par rapport à la source de liquide de traitement (4).

2. Un appareil jet de poudre (1) selon la revendication 1,
**caractérisé par le fait que**
la conduite de substances pour le liquide (30, 31, 32) est reliée à une source d'air comprimé (5) par une conduite (33, 34).

3. Un appareil jet de poudre (1) selon la revendication 2,
**caractérisé par le fait que**
la conduite (33, 34) contient une valve (13) et que lorsque la valve (13) est ouverte, de l'air comprimé entre dans la conduite à liquide (30, 31, 32).

4. Un appareil jet de poudre (1) selon la revendication 3,
**caractérisé par**
un déclencheur pour actionner la valve (13), celui-ci étant raccordé activement avec la valve (13) ou la commande de fonctionnement de l'appareil jet de poudre.

5. Un appareil jet de poudre (1) selon la revendication 3,
**caractérisé par le fait qu'**
une commande de fonctionnement actionne automatiquement la valve (13) à la fin du transport du liquide et / ou du transport de la poudre fluidisée.

6. Un appareil jet de poudre (1) selon la revendication 5,
**caractérisé par le fait qu'**
il y a un retardement temporaire entre la fin du transport du liquide et / ou du transport de la poudre fluidisée et l'actionnement de la valve (13), de préférence dans une plage de 10 à 60 secondes.

7. Un appareil jet de poudre (1) selon une des revendications précédentes,
**caractérisé par le fait que**
l'air de service pour chasser le liquide et l'air pour fluidiser la poudre proviennent de la même source d'air comprimé (5).

8. Un appareil jet de poudre (1) selon une des revendications précédentes,
**caractérisé par le fait que**
pendant le processus de purge, une gaine est prévue pour la réception du mélange de poudre et de liquide s'échappant.

9. Un appareil jet de poudre (1) selon la revendication 8,
**caractérisé par**
un dispositif d'identification de la pièce à main de la gaine relié avec la commande de fonctionnement, la commande de fonctionnement démarrant le processus de purge dès que la pièce à main (2) est introduite dans la gaine.

10. Un appareil jet de poudre (1) selon une des revendications précédentes,
**caractérisé par le fait qu'**
une conduite (37) pour de l'air exempt de particule est réunie avec une conduite (39) pour la poudre fluidisée.

11. Processus pour empêcher la formation d'incrustations, de dépôts et d'obstructions dans des appareils jet de poudre selon la revendication 1 avec apport de liquide (1)
**caractérisé par**
l'expulsion du liquide contenu dans la conduite à liquide (30, 31, 32) grâce à de l'air comprimé lors d'une pause de traitement, alors que l'air comprimé entre dans la conduite à liquide (30, 31, 32) en aval par rapport à la source de liquide de traitement (4).

12. Processus selon la revendication 11,
**caractérisé par le fait que**
le liquide est chassé encore de la pièce à main et du gicleur (2) de l'appareil jet de poudre (1).
